# EUROPEAN PATENT SPECIFICATION

(11) **EP 2 952 479 B1**
(45) Date of publication and mention of the grant of the patent: **24.10.2018**
(21) Application number: 15169787.7
(22) Date of filing: 29.05.2015
(51) Int. Cl.: C01G 19/00, C01G 23/00, C01G 37/14, C01G 45/12, C01G 49/00, C01G 51/00, C01B 13/18, C01G 1/02, C01G 37/00, C01G 45/00, C08K 3/22, C08K 3/26, C09D 7/61

(54) **NICKEL-FREE GREEN PIGMENT**
NICKELFREIES GRÜNES PIGMENT
PIGMENT VERT SANS NICKEL

(30) Priority: 04.06.2014 US 201414296401
(43) Date of publication of application: 09.12.2015
(73) Proprietor: Ferro Corporation, Mayfield Heights, OH 44124 (US)
(72) Inventor: Letschert, Hans-Peter, 63456 Hanau (DE); Ludwig, Stephan, 63543 Neuberg Ravolzhausen (DE); Detrie, Terry J., Washington, PA 15301 (US); Sakoske, George E., Independence, OH 44131 (US)
(74) Representative: Gille Hrabal

(56) References cited:
- EP-A2- 2 100 853
- US-A- 4 202 702
- US-A- 5 501 733

## Description

### BACKGROUND OF THE INVENTION

### 1. Field of Invention

The subject disclosure generally relates to pigment compositions and method of making pigment compositions.

This invention relates to a green pigment that lacks nickel in any form and a method of making it. The pigment is a solid solution of metal oxides including a [124] spinel which can contain certain combinations of lithium, sodium, cobalt, zinc, calcium, magnesium, copper, titanium, manganese, tin, and germanium, and a [134] spinel which can contain certain combinations of lithium, sodium, chromium, boron, iron, manganese aluminum, titanium, tin and germanium.

The green pigment produces colors similar to nickel containing green pigments and provides high hue angle and high TSR (total solar reflectance).

### 2. Description of Related Art

Pigments are widely used in various applications such as paints, inks, plastics, rubbers, ceramics, enamels, and glasses. There are various reasons for using inorganic pigments. Among these are the coloristic properties of the pigments, their visible as well as ultraviolet (UV) and infrared (IR) reflectance characteristics, their light fastness and their high temperature stability. The high temperature stability is necessary when the objects being colored are produced at elevated temperatures.

Pigments exhibit certain colors because they selectively reflect and absorb certain wavelengths of light. White light is an approximately equal mixture of the entire visible spectrum of light. When white light encounters a colored pigment, some wavelengths are absorbed as they interact with the electronic structure of the pigment. These interactions are determined by the chemistry and crystal structure of the pigment. The wavelengths not absorbed are reflected back to the observer, and this reflected visible light spectrum creates the appearance of a color. For example, ultramarine reflects blue light, typically between 400 and 500 nanometers in wavelength, and absorbs visible light of other wavelengths.

The appearance of pigments is also dependent upon the spectrum of the source light. Sunlight has a high color temperature and a fairly uniform spectrum, and is considered a standard for white light. Artificial light sources, including fluorescent light, tend to have great peaks in some regions of their spectrum, and deep valleys in other regions. Viewed under these conditions, pigments may exhibit different colors.
Prior art document US 4,202,702 A relates to inorganic pigments comprising a solid solution of at least two different spinels.
Prior art document EP 2 100 853 A relates to pigments, among others green pigments, whereby these green pigments are Nickel-free and comprise Co, Al, Mg and Fe.
Prior art document US 5 501 733 A relates to fluoridated particulates of a rare earth metal sesquisulfide pigment/colorant. In this prior art document neodymium sulfide is used to obtain green colors or other lanthanoid sulfides to obtain greenish colors.

### SUMMARY

The following presents a simplified summary of the invention in order to provide a basic understanding of some aspects of the invention. This summary is not an extensive overview of the invention. It is intended to neither identify key or critical elements of the invention nor delineate the scope of the invention. Its sole purpose is to present some concepts of the invention in a simplified form as a prelude to the more detailed description that is presented later.

An inorganic pigment in the green color space is the spinel Ti(Coₓ,Ni_{y},Zn_{z})O8 (x+y+z=2). The disadvantage of that compound is that the nickel leaches easily, which leads to a toxic labeling of such pigments.

Additionally, in the turquoise color space CoLi(Ti₃Li)O₈ is known as a pigment but it is closer to blue than green in color shade.

Accordingly, improvements in nickel-free pigments in the green color space are needed.

To the accomplishment of the foregoing and related ends, the invention, then, comprises the features hereinafter fully described and particularly pointed out in the claims. The following description and the annexed drawings set forth in detail certain illustrative embodiments of the invention. These embodiments are indicative, however, of but a few of the various ways in which the principles of the invention can be employed. Other objects, advantages and novel features of the invention will become apparent from the following detailed description of the invention when considered in conjunction with the drawings.

### BRIEF DESCRIPTION OF THE DRAWINGS

Figure 1 shows a UV-VIS-NIR Spectra of Inventive Li_{1.5}Co_{0.5}(Ti_{2.5}Li_{0.5}Cr)O₈ and Ferro's Conventional Nickel-containing green pigment (BO3433).
Figure 2 is UV-VIS-NIR Spectra of Li₂Co(Ti₅Li₂Cr₂)O₁₆ from Example 6 calcined at 800°C for 4h and at 1200°C for 12h.
Figure 3 is UV-VIS-NIR Spectra of CoNa(Ti3Li)O8 from Example 9.

### DETAILED DESCRIPTION OF THE INVENTION

The inventors herein began working systematically to develop a greener inorganic pigment that is nickel free by changing the composition of the turquoise CoLi(Ti₃Li)O₈ by modification of the composition. Co^{II}Li^{I}(Ti^{IV}₃Li^{I})O₈ could be described as a [124] spinel from the oxidation states of the involved metals. The general formula of a spinel is A₂(B₄)O₈, where cation A is in tetrahedral coordination and cation B is in octahedral coordination. By changing the ratio of Li and Co in this compound color shade can be changed but the color is still in the turquoise (bluish) color range, for example CoLi(Ti₃Li)O₈ to CO_{1.5}(Ti₃Li)O₈).

The spinel structure remains also even if the ratio of the elements does not exactly fit the theoretical composition. In this case the electroneutrality is preserved by creating cation or anion vacancies. These vacancies also influence the color of the spinel. The inventors have discovered that by reducing the Li content of CoLi(Ti₃Li)O₈ by 0.5 mol to CoLi_{0.5}Me_{0.5}(Ti₃Li)O₈, where Me is a univalent metal or metalloid, the color is shifted to the greener color space.

It is also possible to incorporate other elements into the same [124] spinel structure like: Cu, Zn, Mg, and Ca, instead of Co or Li, such exchange of the elements in the A position of the spinel resulting in various colors: CoCu_{0.5}(Ti₃Li)O₈(dark grey), Co_{0.5}Zn_{0.5}Li(Ti₃Li)O₈ (light turquoise), Co_{0.9}Zn_{0.1}Li(Ti₃Li)O₈ (light turquoise), Co_{0.5}Cu(Ti₃Li)O₈ (dark green gray), Co_{0.5}Mg_{0.5}Li(Ti₃Li)O₈ (light turquoise). However, such trials still do not shift the color into the color space of the Ni containing series Ti(Coₓ,Ni_{y,}Zn_{z})O₈.

Beside the [124] spinels also [134] spinels of the general formula A^{I}(B^{III}C^{IV})O₈ are possible such as: LiAlMnO₈, LiFeTiO₈ or LiCrTiO₈. The last mentioned is dirty buff colored.

The inventors found that the latter compound, which could be also written as Li₂(Cr₂Ti₂)O₈ could be used to form solid solutions with the turquoise colored [124] spinel CoLi(Ti₃Li)O₈ in any ratio. For example a 1:1 solid solution: Li₂(Cr₂Ti₂)O₈ + CoLi(Ti₃Li)O₈ -> Li₃Co(Ti₅LiCr₂)O₁₆ = Li_{1.5}Co_{0.5}(Ti_{2.5}Li_{0.5}Cr)O₈.

This last mentioned compound is interesting since it is colored like the Ni containing Ti(Coₓ,Ni_{y},Zn_{z})O₄ where x + y + z = 2.

Ferro Corporation's standard nickel-containing pigment Ti(Coₓ,Ni_{y},Zn_{z})O₈ (x+y+z=2)named BO3433 has a hue angle of 150.6° whereas the compound Li_{1.5}Co_{0.5}(Ti_{2.5}Li_{0.5}Cr)O₈ has a hue angle of 150.9°. Hence Li_{1.5}Co_{0.5}(Ti_{2.5}Li_{0.5}Cr)O₈ is a near perfect nickel-free substitute for BO3433. Solid solutions of the [124] spinel CoLi(Ti₃Li)O₈ with [134] Li₂(Cr₂Ti₂)O₈ spinels produce greener colors along the lines of Ferro's BO3433 without nickel.

Accordingly, an embodiment of the invention is a nickel-free green pigment comprising a solid solution of first and second mixed metal oxides, (a) the first mixed metal oxide comprising (i) at least one element A selected from the group consisting of lithium and sodium, (ii) at least one element B selected from the group consisting of cobalt, zinc, calcium, magnesium, and copper, and (iii) at least one element D selected from the group consisting of titanium, manganese, tin and germanium, (b) a second mixed metal oxide comprising (i) at least one element A selected from the group consisting of lithium and sodium, (ii) at least one element C selected from the group consisting of chromium, boron, iron, manganese, and aluminum, and (iii) at least one element D selected from the group consisting of titanium, manganese and germanium, and (c) no nickel.

Accordingly, an embodiment of the invention is a pigment comprising a solid solution of (a) a [124] spinel having the formula AB(D₃A)O₈, where A is selected from the group consisting of Li and Na; wherein B is selected from the group consisting of Co, Zn, Ca, Mg, and Cu; and D is selected from the group consisting of Ti, Mn, Sn, and Ge) with (b) a [134] spinel having the formula A₂(C₂D₂)O₈ wherein A is selected from the group consisting of Li and Na; C is selected from the group consisting of Cr, B, Fe, and Mn, and D is selected from the group consisting of Ti, Mn, Sn, and Ge, wherein the pigment exhibits a hue angle between 120 and 180°.

An embodiment of the invention is a method of making a nickel-free green pigment comprising a solid solution of first and second mixed metal oxides, the method comprising, (a) mixing particles of (i) a first mixed metal oxide comprising (1) at least one element A selected from the group consisting of lithium and sodium, (2) at least one element B selected from the group consisting of cobalt, zinc, calcium, magnesium, and copper, (3) at least one element D selected from the group consisting of titanium, manganese, tin and germanium, (4) no nickel, with (ii) a second mixed metal oxide comprising (1) at least one element A selected from the group consisting of lithium and sodium, (2) at least one element C selected from the group consisting of chromium, boron, iron, manganese and aluminum, and, (3) at least one element D selected from the group consisting of titanium, manganese, tin and germanium, and (4) no nickel, to form a mixture, and (b) heating the mixture at a temperature of 800-1700°C for a time of 1 to 1000 minutes to form at least one of particles and agglomerates of a green pigment.

An embodiment of the invention is a method of imparting a green color to a substrate, comprising, (a) applying to a substrate and (b) firing a nickel-free green pigment comprising a solid solution of first and second mixed metal oxides, (i) the first mixed metal oxide comprising (1) at least one element A selected from the group consisting of lithium and sodium, (2) at least one element B selected from the group consisting of cobalt, zinc, calcium, magnesium, and copper, (3) at least one element D selected from the group consisting of titanium, manganese, tin and germanium, and (4) no nickel, (ii) the second mixed metal oxide comprising (1) at least one element A selected from the group consisting of lithium and sodium, (2) at least one element C selected from the group consisting of chromium, boron, iron, manganese and aluminum and, (3) at least one element D selected from the group consisting of titanium, manganese, tin and germanium, and (4) no nickel.

An embodiment of the invention is a method of imparting a green color to a plastic composition, comprising, melt mixing (a) a plastic composition, with (b) a nickel-free green pigment comprising a solid solution of first and second mixed metal oxides, (i) the first mixed metal oxide comprising (1) at least one element A selected from the group consisting of lithium and sodium, (2) at least one element B selected from the group consisting of cobalt, zinc, calcium, magnesium, and copper, (3) at least one element D selected from the group consisting of titanium, manganese, tin and germanium, and (4) no nickel, (ii) the second mixed metal oxide comprising (1) at least one element A selected from the group consisting of lithium and sodium, (2) at least one element C selected from the group consisting of chromium, boron, iron, manganese and aluminum, (3) at least one element D selected from the group consisting of titanium, manganese, tin and germanium, and (4) no nickel.

**The** subject pigment compositions are a solid solution of a [124] spinel and a [134] spinel. In one embodiment, the [124] spinel has the formula BA(D₃A)O₈. In one embodiment, the [134] spinel has the formula A₂(C₂D₂)O₈, In one embodiment, the [124] spinel has the formula BA(D₃A)O₈ and the [134] spinel has the formula A₂(C₂D₂)O₈. In one embodiment the [124] spinel has a formula selected from the group consisting of (Co, Zn, Ca, Mg, Cu)(Li, Na)[(Ti, Mn, Sn, Ge)₃(Li, Na)]O₈, CoLi(Ti₃Li)O₈ and CO₍₁₋ₓ₎ZnₓLi(Ti₃Li)O₈, where x is 0 to 1. In one embodiment, the [134] spinel has the formula (Li, Na) [(Cr, B, Fe, Mn, Al)₂(Ti, Mn, Sn, Ge)₂]O₈. In one embodiment the [124] spinel has a formula selected from the group consisting of (Co, Zn, Ca, Mg, Cu)(Li, Na)[(Ti, Mn, Sn, Ge)₃(Li, Na)]O₈, CoLi(Ti₃Li)O₈ and Co₍₁₋ₓ₎ZnₓLi(Ti₃Li)O₈, where x is 0 to 1 and the [134] spinel has the formula (Li, Na) [(Cr, B, Fe, Mn, Al)₂(Ti, Mn, Sn, Ge)₂]O₈.

In a preferred embodiment, the [134] spinel has the formula Li₂(Cr₂Ti₂)O₈.

In any embodiment of the invention, the pigment may include a first mixed metal oxide selected from the group consisting of CoLi(Ti₃Li)O₈, CoLi(Ti₃Na)O₈, CoLi(Mn₃Li)O₈, CoLi(Ti₃Li)O₈, CoLi(Ge₃Li)O₈, CoLi(Mn₃Na)O₈, CoLi(Ti₃Na)O₈, CoLi(Ge₃Na)O₈, CoLi(Sn₃Li)O₈, CoLi(Sn₃Na)O₈, CoNa(Ti₃Li)O₈, CoNa(Ti₃Na)O₈, CoNa(Mn₃Li)O₈, CoNa(Ti₃Li)O₈, CoNa(Ge₃Li)O₈, CoNa(Mn₃Na)O₈, CoNa(Ti₃Na)O₈,CoNa(Ge₃Na)O₈, CoNa(Sn₃Li)O₈,CoNa(Sn₃Na)O₈, ZnLi(Ti₃Li)O₈, ZnLi(Ti₃Na)O₈, ZnLi(Mn₃Li)O₈, ZnLi(Ti₃Li)O₈, ZnLi(Ge₃Li)O₈, ZnLi(Mn₃Na)O₈, ZnLi(Ti₃Na)O₈, ZnLi(Ge₃Na)O₈, ZnLi(Sn₃Li)O₈, ZnLi(Sn₃Na)O₈, ZnNa(Ti₃Li)O₈, ZnNa(Ti₃Na)O₈, ZnNa(Mn₃Li)O₈, ZnNa(Ti₃Li)O₈, ZnNa(Ge₃Li)O₈, ZnNa(Mn₃Na)O₈, ZnNa(Ti₃Na)O₈, ZnNa(Ge₃Na)O₈, ZnNa(Sn₃Li)O₈, ZnNa(Sn₃Na)O₈, CaLi(Ti₃Li)O₈, CaLi(Ti₃Na)O₈, CaLi(Mn₃Li)O₈, CaLi(Ti₃Li)O₈, CaLi(Ge₃Li)O₈, CaLi(Mn₃Na)O₈, CaLi(Ti₃Na)O₈, CaLi(Ge₃Na)O₈, CaLi(Sn₃Li)O₈, CaLi(Sn₃Na)O₈, CaNa(Ti₃Li)O₈, CaNa(Ti₃Na)O₈, CaNa(Mn₃Li)O₈, CaNa(Ti₃Li)O₈, CaNa(Ge₃Li)O₈, CaNa(Mn₃Na)O₈, CaNa(Ti₃Na)O₈, CaNa(Ge₃Na)O₈, CaNa(Sn₃Li)O₈, CaNa(Sn₃Na)O₈, MgLi(Ti₃Li)O₈, MgLi(Ti₃Na)O₈, MgLi(Mn₃Li)O₈, MgLi(Ti₃Li)O₈, MgLi(Ge₃Li)O₈, MgLi(Mn₃Na)O₈, MgLi(Ti₃Na)O₈, MgLi(Ge₃Na)O₈, MgLi(Sn₃Li)O₈, MgLi(Sn₃Na)O₈, MgNa(Ti₃Li)O₈, MgNa(Ti₃Na)O₈, MgNa(Mn₃Li)O₈, MgNa(Ti₃Li)O₈, MgNa(Ge₃Li)O₈, MgNa(Mn₃Na)O₈, MgNa(Ti₃Na)O₈, MgNa(Ge₃Na)O₈, MgNa(Sn₃Li)O₈, MgNa(Sn₃Na)O₈, CuLi(Ti₃Li)O₈, CuLi(Ti₃Na)O₈, CuLi(Mn₃Li)O₈, CuLi(Ti₃Li)O₈, CuLi(Ge₃Li)O₈, CuLi(Mn₃Na)O₈, CuLi(Ti₃Na)O₈, CuLi(Ge₃Na)O₈, CuLi(Sn₃Li)O₈, CuLi(Sn₃Na)O₈, CuNa(Ti₃Li)O₈, CuNa(Ti₃Na)O₈, CuNa(Mn₃Li)O₈, CuNa(Ti₃Li)O₈, CuNa(Ge₃Li)O₈, CuNa(Mn₃Na)O₈, CuNa(Ti₃Na)O₈, CuNa(Ge₃Na)O₈, CuNa(Sn₃Li)O₈, CuNa(Sn₃Na)O₈ and combinations thereof.

In any embodiment of the invention, the pigment may include a second mixed metal oxide selected from the group consisting of Li₂(Cr₂Ti₂)O₈, Li₂(Cr₂Mn₂)O₈, Li₂(Cr₂Sn₂)O₈, Li₂(Cr₂Ge₂)O₈, Li₂(B₂Ti₂)O₈, Li₂(B₂Mn₂)O₈, Li₂(B₂Sn₂)O₈, Li₂(B₂Ge₂)O₈, Li₂(Fe₂Ti₂)O₈, Li₂(Fe₂Mn₂)O₈, Li₂(Fe₂Sn₂)O₈, Li₂(Fe₂Ge₂)O₈, Li₂(Mn₂Ti₂)O₈, Li₂(Mn₂Sn₂)O₈, Li₂(Mn₂Ge₂)O₈, Li₂(Al₂Ti₂)O₈, Li₂(Al₂Mn₂)O₈, Li₂(Al₂Sn₂)O₈, Li₂(Al₂Ge₂)O₈, Na₂(Cr₂Ti₂)O₈, Na₂(Cr₂Mn₂)O₈, Na₂(Cr₂Ge₂)O₈, Na₂(Cr₂Sn₂)O₈, Na₂(B₂Ti₂)O₈, Na₂(B₂Mn₂)O₈, Na₂(B₂Ge₂)O₈, Na₂(B₂Sn₂)O₈, Na₂(Fe₂Ti₂)O₈, Na₂(Fe₂Mn₂)O₈, Na₂(Fe₂Ge₂)O₈, Na₂(Sn₂Mn₂)O₈, Na₂(Mn₂Ti₂)O₈, Na₂(Mn₂Ge₂)O₈, Na₂(Al₂Ti₂)O₈, Na₂(Al₂Mn₂)O₈, Na₂(Al₂Sn₂)O₈, and Na₂(Al₂Ge₂)O₈ and combinations thereof.

**The** [124] and [134] spinels in the preceding two paragraphs may be combined in various molar ratios, for example 100:1 to 1:100, 50:1 to 1:50, 25:1 to 1:25, or 10:1 to 1:10 or values therebetween. The ratios may be calculated based on element A as set forth in the formulae BA(D₃A)O₈ or A₂(C₂D₂)O₈.

While the pigments of the invention do not include any intentionally added nickel, it is possible that residual nickel could be found in product pigments of the invention. Such nickel may occur naturally in combination with other transition metals used in the inventive pigments such as cobalt, manganese, iron, zinc and the like. In any case, regardless of the source, in one embodiment, the pigments of the invention have leachable nickel of less than 100 ppm, preferably less than 10 ppm, more preferably less than 1 ppm when measured in accordance with DIN EN71/3:2013.

### Pigment processing.

The final mixed spinels are formed by combining and calcining appropriate ratios of reactive compounds, usually salts, that contain the metals of interest. For example, carbonates, nitrates, oxalates, phosphates, hydroxides, fluorides, borates, boric acid, organometallics (such as alkoxides, ethoxides, methoxides, propoxides, butoxides, pentoxides, etc.), which include one or more of the metals (or metalloids) of concern, namely Co, Zn, Ca, Mg, Cu, Li, Na, Ti, Mn, Sn, Ge, Cr, B, Fe, Mn, and Al. The preceding sentence is intended to be read as disclosing every possible combination of named metal (metalloid) with every possible anion listed. The mixtures are calcined at 700-1700°C, preferably 800-1700 °C, preferably 700-1500°C, more preferably 800-1100°C, for 1-10000 minutes, preferably 1-1000 minutes more preferably 1-100 minutes, and milled to a desired particle size, for example 0.001-50 microns, 0.01-40 microns, 0.1-25 microns, or 1-10 microns. Any calcining and milling operations disclosed herein can be performed at the times, temperatures and to achieve the particle sizes noted in the previous sentence. Most preferably, the calcining is done at 800-1100°C for 60-360 minutes.

In the methods of the invention, the calcined pigment may be cooled, for example to room temperature at a rate of 1- 50°C per minute. The calcined pigment particles may be reduced in size by, for example, milling, to a D₅₀ particle size of 1-10 microns.

**The** starting particles of salts, (carbonates, nitrates, oxalates, etc.) may be of any size, but to improve reactivity and reduce processing times and costs, preferably have a D₉₀ particle size of less than 20 microns, more preferably less than 10 microns, still more preferably less than 6 microns, and even more preferably less than 5 microns.

In certain embodiments, one or more mineralizers can be added in the amount of 0.01-10, preferably 0.01-5 wt% of the raw mixture to help forming the desired spinel, for example, NaCl, LiF, Na₂SiF₆, Na₃(AlF₆), KCl, NH₄Cl, BaF₂, CaF₂, H₃BO₃, and others.

Applications. The pigments of the invention may be used to impart color to paints (and other coatings), curable coatings (such as radiation curable), roofing products such as roofing tiles, inks, plastics, rubbers, ceramics, enamels, and glasses. Plastic or rubber substrate compositions that can be colored and marked using the green pigments according to this invention can be based upon polymeric materials that can be natural or synthetic. Halogenated polymers can be used. Examples include natural resins, rubber, chlororubber, casein, oil-modified alkyd resins, viscose, cellulose acetate, cellulose propionate, cellulose acetobutyrate, nitrocellulose, or other cellulose ethers or esters. Synthetic organic polymers produced by polymerization, polyaddition, or polycondensation in thermosetting or thermoplastics can also be colored by this invention. Examples are polyethylene, polystyrene, polypropylene, polyisobutylene, polyvinylchloride, polyvinylacetate, polyacrylonitrile, poly acrylic acid, other polyolefins and substituted polyolefins, as well as methyacrylic acid esters, butadiene, as well as co polymers of the above mentioned. Examples from polyaddition and polycondensation resins are the condensation products of formaldehyde with phenols, phenolic resins, urea, thiourea, and melamine, amino resins, polyesters, polyamides, polycarbonates, and/or silicones. These polymers can be present individually or as mixtures as plastic material or melts spun into fibers. They can also be dissolved as film formers or binders for laquers, paints, or printing inks such as linseed oil, nitrocellulose, melamine resins, acrylic resins, urea formaldehyde resins and the like. The pigmentary use of the present green pigments and compounds in other coatings or materials such as carbon-carbon composites may also provide advantages with regard to IR reflection. Also envisioned as embodiments of the invention are a plastic body such as a substrate containing the pigment (such as vinyl siding) and/or any substrate (glass, ceramic, metal, plastic, composite) having thereon an organic coating or paint which would contain and utilize the green pigments of the invention with properties such as high contrast laser markability, electronic properties, or low heat build-up properties. An embodiment of the invention is a metal or glass substrate at least partially coated with the nickel-free green pigment of claim 1.

Curable coatings. Representative useful thermoplastic polymers include polyolefins such as polyethylene and polypropylene, polyesters, polycarbonates, polysulfones, polyimides, polyamides, polyurethanes, acrylics, styrene acrylics, polyvinyl chlorides, and others. For certain high solid applications, thermoplastic polymers having a number average molecular weight less than 35,000, and optionally less than about 20,000, and optionally less than 10,000, will provide relatively low viscosity solutions when dissolved in suitable amounts of the unsaturated monomers, oligomers and reactants. Thermoplastic acrylic polymers are generally useful to provide favorable cost and performance characteristics, and are conveniently prepared by methods well known in the art such as by solution polymerization of acrylic and/or methacrylic monomers in an appropriate solvent or diluent.

An embodiment of the invention is a paint or coating comprising pigment made by any method disclosed herein, wherein the paint or coating exhibits a total solar reflectance over black of at least 15% and preferably at least 20%, in accordance with ASTM E903, which is calculated based on standard reference spectral irradiance ASTM G173.

An embodiment of the invention is a paint or coating comprising pigments disclosed elsewhere herein wherein the paint or coating exhibits a total solar reflectance over black of at least 15% and preferably at least 20%, in accordance with ASTM E903, which is calculated based on standard reference spectral irradiance ASTM G173.

**An** embodiment of the invention is a plastic composition comprising pigments disclosed elsewhere herein or pigments made by any method disclosed herein, wherein the plastic composition exhibits a total solar reflectance over black of at least 15% and preferably at least 20%, in accordance with ASTM E903, which is calculated based on standard reference spectral irradiance ASTM G173.

When used in a plastic composition or curable coating, the green pigments of the invention may be used together with other pigments. Any mixed metal oxide pigment may be used in conjunction with the green pigments of the invention. Preferably, such additional pigments are also nickel-free in accordance with the goals of the invention. However, in some embodiments, nickel-containing pigments may be used. Pigments such as Pigment Yellow 184, Pigment Yellow 227, Pigment Orange 82 and Pigment Yellow 216 may be used in any combination with the green pigments of the invention. Also, singly or in combination, BiV, SnTiZn and NiTiO3 may be used.

An embodiment of the invention is a plastic, rubber or curable coating (as set forth in the preceding two paragraphs) including a green pigment disclosed elsewhere herein or made by any method disclosed elsewhere herein.

Examples. The following examples illustrate, but do not limit, the scope of the invention.

### Example 1.

**The** compound Li_{1.5}Co_{0.5}(Ti_{2.5}Li_{0.5}Cr)O₈ is produced by dry mixing of the metal oxides or carbonates (Table 1, below) followed by calcining at 900°C for 8 hours in open saggers and wet milling to d₉₀ of 4.5 microns.

**Table 1: Recipe to produce Li_{1.5}Co_{0.5}(Ti_{2.5}Li_{0.5}Cr)O₈**

| | | |
|---|---|---|
| 19.09 | kg | lithium carbonate |
| 9.68 | kg | cobalt oxide |
| 51.59 | kg | titanium dioxide |
| 19.64 | kg | chromium oxide |

The production of Li_{1.5}Co_{0.5}(Ti_{2.5}Li_{0.5}Cr)O₈ can be exemplified by the following reaction:

Li₂(Cr₂Ti₂)O₈ + CoLi(Ti₃Li)O₈ -> Li₃Co(Ti₅LiCr₂)O₁₆ = Li_{1.5}Co_{0.5}(Ti_{2.5}Li_{0.5}Cr)O₈.

The pigment (Li_{1.5}Co_{0.5}(Ti_{2.5}Li_{0.5}Cr)O₈) produces the following coloristic properties (CIELab D65 10°), where the Masstone sample includes 6.4 g Plastisol and 0.3 g Pigment, while the Tint sample includes 6.4 grams Plastisol; 0.3 grams Pigment and 1.2 grams TiO₂-Color values (CIELab D65 10°) of that trial measured in Plastisol:

| | **Masstone** | **Tint** |
|---|---|---|
| L* | 45.9 | 74.4 |
| a* | -26 | -18.2 |
| b* | 14.4 | 10.2 |
| Hue Angle | 151.1 ° | 150.9° |

The plastisol in this and all examples is a suspension of PVC in a liquid plasticizer, which is a standard formulation commercially available from: Rottolin-Werk - Julius Rotter & Co.KG, Bayreuth, Germany; and has the product name: Plastisol Typ U91.7.0.429.59.
In addition, the TSR (over Black) of this compound is 31 as compared to a conventional Ni containing Pigment, which exhibits a TSR of 22 when identically formulated. TSR is measured in accordance with ASTM E903, which is calculated based on standard reference spectral irradiance ASTM G173.

### Example 2. Li₄Co₃(Ti₁₁Li₃Cr₂)O₃₂:

The following oxides and carbonates are dry mixed, followed by calcining at 900°C for 8 hours in open saggers, followed by wet milling to d₉₀ of 4.3 microns.

**Recipe:**

| | | |
|---|---|---|
| 19.06 | kg | lithium carbonate |
| 14.49 | kg | cobalt oxide |
| 56.65 | kg | titanium dioxide |
| 9.8 | kg | chromium oxide |

Color values (CIELab D65 10°) of that trial measured in Plastisol:

| | Masstone | Tint |
|---|---|---|
| L* | 45.9 | 74.8 |
| a* | -31.5 | -22 |
| b* | 7.2 | 4.4 |

### Example 3: (Co_{1.3}Zn_{0,2}Li₂)(Ti_{5.5}Li_{1.5}Cr)O₈

The following oxides and carbonates are dry mixed, followed by calcining at 900°C for 8 hours in open saggers, followed by wet milling to d₉₀ of 4.4 microns.

**Recipe:**

| | | |
|---|---|---|
| 8.53 | kg | lithium carbonate |
| 6.42 | kg | cobalt oxide |
| 27.97 | kg | titanium dioxide |
| 5.01 | kg | chromium oxide |
| 1.07 | Kg | Zinc oxide |

Color values (CIELab D65 10°) of that trial measured in Plastisol:

| | Masstone | Tint |
|---|---|---|
| L* | 49 | 75,6 |
| a* | -31.3 | -21.4 |
| b* | 8.5 | 5.0 |

### Example 4: (CoLi_{0.5})(Ti₂Cr_{0.5}Sb_{0.5}Li)O₈

The following oxides and carbonates are dry mixed, followed by calcining at 900°C for 8 hours in open saggers, followed by wet milling to d₉₀ of 4.4 microns.

**Recipe:**

| | | |
|---|---|---|
| 8.45 | kg | lithium carbonate |
| 11.42 | kg | cobalt oxide |
| 24.34 | kg | titanium dioxide |
| 5.79 | kg | chromium oxide |
| 10.34 | kg | antimony oxide |

Color values (CIELab D65 10°) of that trial measured in Plastisol:

| | Masstone | Tint |
|---|---|---|
| L* | 41.3 | 72.4 |
| a* | -20.9 | -16 |
| b* | 8.5 | 5.8 |

### Example 5, LiCo_{0.5}(Ti_{2.5}LiCr)O₈, with mineralizer.

The following oxides and carbonates are dry mixed, followed by calcining at 900°C for 8 hours in open saggers, followed by wet milling to d₉₀ of 5.3 microns.

**Recipe:**

| | | |
|---|---|---|
| 37.80 | kg | lithium carbonate |
| 19.16 | kg | cobalt oxide |
| 103.18 | kg | titanium dioxide |
| 38.89 | kg | chromium oxide |
| 2 | kg | Ammonium chloride |

Color values (CIELab D65 10°) of that trial measured in Plastisol:

| | Masstone | Tint |
|---|---|---|
| L* | 46.2 | 74.3 |
| a* | -27.2 | -19.2 |
| b* | 15.0 | 10.3 |

### Test of Example 1 & 2 pigments on a flat glass enamel:

Pigments from Examples 1 & 2 were tested with 15% pigment and 85% glass flux 104007, lead-free, commercially available from Ferro Corporation, Cleveland, Ohio. The pigment/ glass mixture was screen printing on 4 mm float glass and fired at 690°C for 3min.

The resultant color values (CIELab D65 10°) were:

| | Example 1 | Example 2 |
|---|---|---|
| L* | 48.7 | 46.5 |
| a* | -29.1 | -31.7 |
| b* | 17.7 | 13.5 |

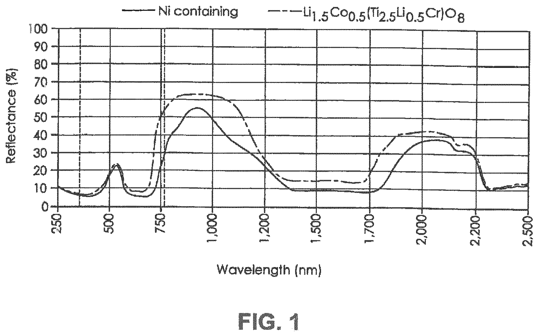

In the spectrum in Figure 1, the upper curve represents the inventive pigment Li_{1.5}Co_{0.5}(Ti_{2.5}Li_{0.5}Cr)O₈. The lower curve represents Ferro's conventional Nickel-containing green pigment (BO3433). The vertical dashed lines represent the bounds of the visible spectrum. The inventive nickel-free pigment provides increased reflectance over the conventional nickel-containing green pigment over virtually the entire EM spectrum from 250 to 2500 nanometers, especially in the overall infrared region and especially the near infrared region.

### Example 6. Li₂Co(Ti₅Li₂Cr₂)O₁₆ is produced at different calcination temperatures and times.

The following raw materials in Table 2 are dry mixed, followed by calcining at 800, 900, 1000, 1100 and 1200°C for 4, 8, and 12 hours in open saggers, followed by wet milling to d₉₀ of 4 microns.

**Table 3. Recipe to produce Li₂Co(Ti₅Li₂Cr₂)O₁₆**

| | | |
|---|---|---|
| 19.09 | kg | lithium carbonate |
| 9.68 | kg | cobalt oxide |
| 51.60 | kg | titanium dioxide |
| 19.64 | kg | chromium oxide |

**Table 4. Color values (CIELab D65 10°) of the Li₂Co(Ti₅Li₂Cr₂)O₁₆ trials measured in Plastisol:**

| **Max. temperature [°C]** | **time at max. temperature [h]** | **L*** | **a*** | **b*** |
|---|---|---|---|---|
| 800 | 4 | 45.9 | -24.3 | 15.7 |
| 800 | 8 | 45.4 | -24.5 | 15.4 |
| 800 | 12 | 45.7 | -25.5 | 14.8 |
| 900 | 4 | 42.0 | -23.9 | 13.2 |
| 900 | 8 | 43.1 | -25.0 | 14.0 |
| 900 | 12 | 48.0 | -28.6 | 14.3 |
| 1000 | 4 | 47.5 | -27.9 | 14.7 |
| 1000 | 8 | 45.7 | -26.6 | 14.2 |
| 1000 | 12 | 45.4 | -27.6 | 14.0 |
| 1100 | 4 | 45.0 | -25.8 | 13.5 |
| 1100 | 8 | 43.2 | -24.9 | 12.9 |
| 1100 | 12 | 44.3 | -25.6 | 13.4 |
| 1200 | 4 | 44.6 | -25.7 | 13.1 |
| 1200 | 8 | 43.7 | -24.7 | 13.0 |
| 1200 | 12 | 45.9 | -26.2 | 13.5 |

### Example 7. Li₄Co₃(Ti₁₁Li₄Cr₂)O₃₂ at different calcination temperatures and time

The following raw materials in Table 5 are dry mixed, followed by calcining at 800, 900, 1000, 1100 and 1200°C for 4, 8, and 12 hours in open saggers, followed by wet milling to d₉₀ of 4 microns.

**Table 6. Recipe to produce Li₄Co₃(Ti₁₁Li₄Cr₂)O₃₂**

| | | |
|---|---|---|
| 19.06 | kg | lithium carbonate |
| 14.49 | kg | cobalt oxide |
| 56.65 | kg | titanium dioxide |
| 9.80 | kg | chromium oxide |

**Table 7. Color values (CIELab D65 10°) of Li₄Co₃(Ti₁₁Li₄Cr₂)O₃₂ trials measured in Plastisol:**

| **max temperature [°C]** | **time at max temperature [h]** | **L*** | **a*** | **b*** |
|---|---|---|---|---|
| 800 | 4 | 48.1 | -30.4 | 8.1 |
| 800 | 8 | 47.8 | -31.0 | 8.0 |
| 800 | 12 | 46.5 | -30.9 | 7.5 |
| 900 | 4 | 43.4 | -30.1 | 7.2 |
| 900 | 8 | 44.2 | -31.5 | 8.2 |
| 900 | 12 | 49.5 | -34.7 | 7.5 |
| 1000 | 4 | 48.3 | -34.3 | 7.7 |
| 1000 | 8 | 46.7 | -33.7 | 8.0 |
| 1000 | 12 | 48.0 | -34.1 | 7.7 |
| 1100 | 4 | 47.1 | -33.3 | 7.2 |
| 1100 | 8 | 46.5 | -33.1 | 7.4 |
| 1100 | 12 | 46.9 | -33.3 | 7.3 |
| 1200 | 4 | 47.6 | -32.1 | 6.7 |
| 1200 | 8 | 46.9 | -32.9 | 7.3 |
| 1200 | 12 | 48.5 | -33.2 | 7.0 |

### Example 8: CoLi(Mn₃Li)O₈ (not according to the present invention)

The following raw materials in Table 8 are dry mixed, followed by calcining at 900°C for 8 hours in open saggers, followed by wet milling to d₉₀ of 4.5 microns.

**Table 8: Recipe for CoLi(Mn₃Li)O₈:**

| | | |
|---|---|---|
| 9.02 | Kg | lithium carbonate |
| 9.15 | Kg | cobalt oxide |
| 31.83 | Kg | Manganese oxide |

**Table 9. Color values (CIELab D65 10°) of the CoLi(Mn₃Li)O₈ trials of Table 8 measured in Plastisol as masstone:**

| | Masstone |
|---|---|
| L* | 26.91 |
| a* | 0.66 |
| b* | 0.22 |

### Example 9: CoNa(Ti₃Li)O₈ (not according to the present invention)

The raw materials in Table 10 below are dry mixed, followed by calcining at 900°C for 8 hours in open saggers, followed by wet milling to d₉₀ of 4.5 microns.

**Table 10 Recipe for CoNa(Ti₃Li)O₈:**

| | | |
|---|---|---|
| 4.57 | kg | lithium carbonate |
| 9.26 | kg | cobalt oxide |
| 29.62 | kg | titanium hydrate |
| 6.55 | kg | sodium carbonate |

**Table 11. Color values (CIELab D65 10°) of the trial of CoNa(Ti₃Li)O₈ measured in Plastisol as masstone:**

| | Masstone |
|---|---|
| L* | 37.42 |
| a* | -12 |
| b* | 6.54 |

### Example 10: ZnLi(Ti₃Na)O₈ (not according to the present invention)

The following raw materials in Table 12 are dry mixed, followed by calcining at 900°C for 8 hours in open saggers, followed by wet milling to d₉₀ of 4.0 microns.

**Table 12 Recipe for ZnLi(Ti₃Na)O₈:**

| | | |
|---|---|---|
| 8.99 | kg | lithium carbonate |
| 19.81 | kg | zinc oxide |
| 58.31 | kg | titanium oxide |
| 12.90 | kg | sodium carbonate |

**Table 13. Color values (CIELab D65 10°) of the ZnLi(Ti₃Na)O₈ trial measured in Plastisol as masstone:**

| | Masstone |
|---|---|
| L* | 38.25 |
| a* | -1.68 |
| b* | 3.54 |

### Example 11: ZnNa(Mn₃Na)O₈ (not according to the present invention)

The following raw materials in Table 14 are dry mixed, followed by calcining at 900°C for 8 hours in open saggers, followed by wet milling to d₉₀ of 4.2 microns.

**Table 14. Recipe for ZnNa(Mn₃Na)O₈:**

| | | |
|---|---|---|
| 8.99 | Kg | lithium carbonate |
| 9.08 | Kg | zinc oxide |
| 29.10 | Kg | manganese oxide |
| 11.82 | Kg | sodium carbonate |

**Table 15. Color values (CIELab D65 10°) of the ZnNa(Mn₃Na)O₈ trial measured in Plastisol as masstone:**

| | Masstone |
|---|---|
| L* | 28.55 |
| a* | 1.66 |
| b* | 2.02 |

### Example 12: CaLi(Sn₃Na)O₈ (not according to the present invention)

The following raw materials in Table 16 are dry mixed, followed by calcining at 900°C for 8 hours in open saggers, followed by wet milling to d₉₀ of 4.6 microns.

**Table 16. Recipe for CaLi(Sn₃Na)O₈:**

| | | |
|---|---|---|
| 2.88 | kg | lithium carbonate |
| 35.20 | kg | tin hydrate sol (27% SnO2) |
| 7.79 | kg | calcium carbonate |
| 4.13 | kg | sodium carbonate |

**Table 17. Color values (CIELab D65 10°) of the CaLi(Sn₃Na)O₈ trial measured in Plastisol as masstone:**

| | Masstone |
|---|---|
| L* | 21.74 |
| a* | -3.25 |
| b* | 1.36 |

### Example 13: CaNa(Mn₃Na)O₈ (not according to the present invention)

The following raw materials in Table 18 are dry mixed, followed by calcining at 900°C for 8 hours in open saggers, followed by wet milling to d₉₀ of 4.3 microns.

**Table 18 Recipe for CaNa(Mn₃Na)O₈:**

| | | |
|---|---|---|
| 21.44 | kg | calcium carbonate |
| 55.86 | kg | manganese oxide |
| 22.70 | kg | sodium carbonate |

**Table 19. Color values (CIELab D65 10°) of the CaNa(Mn₃Na)O₈ trial measured in Plastisol as masstone:**

| | Masstone |
|---|---|
| L* | 26.98 |
| a* | 0.65 |
| b* | 0.52 |

### Example 14: MgLi(Ti₃Na)O₈ (not according to the present invention)

The following raw materials in Table 20 are dry mixed, followed by calcining at 900°C for 8 hours in open saggers, followed by wet milling to d₉₀ of 4.3 microns.

**Table 20: Recipe for MgLi(Ti₃Na)O₈:**

| | | |
|---|---|---|
| 8.66 | kg | lithium carbonate |
| 21.66 | kg | magnesium hydroxide carbonate |
| 22.74 | kg | sodium carbonate |
| 56.17 | kg | titanium dioxide |

**Table 21. Color values (CIELab D65 10°) of the MgLi(Ti₃Na)O₈ trial measured in Plastisol as masstone:**

| | Masstone |
|---|---|
| L* | 23.55 |
| a* | -1.03 |
| b* | -2.36 |

### Example 15: MgNa(Mn₃Li)O₈ (not according to the present invention)

The following raw materials in Table 22 are dry mixed, followed by calcining at 900°C for 8 hours in open saggers, followed by wet milling to d₉₀ of 4.1 microns.

**Table 22. Recipe for MgNa(Mn₃Li)O₈:**

| | | |
|---|---|---|
| 8.25 | kg | lithium carbonate |
| 21.66 | kg | magnesium hydroxide carbonate |
| 11.84 | kg | sodium carbonate |
| 58.25 | kg | manganese dioxide |

**Table 23. Color values (CIELab D65 10°) of the MgNa(Mn₃Li)O₈ trial measured in Plastisol as masstone:**

| | Masstone |
|---|---|
| L* | 29.88 |
| a* | 4.88 |
| b* | 5.22 |

### Example 16: CuLi(Ti₃Li)O₈ (not according to the present invention)

The following raw materials in Table 23 are dry mixed, followed by calcining at 900°C for 8 hours in open saggers, followed by wet milling to d₉₀ of 4.7 microns.

**Table 23. Recipe for CuLi(Ti₃Li)O₈.**

| | | |
|---|---|---|
| 17.42 | kg | lithium carbonate |
| 53.50 | kg | titanium hydrate |
| 26.07 | kg | copper hydroxide carbonate |

**Table 24. Color values (CIELab D65 10°) of the CuLi(Ti₃Li)O₈ trial measured in Plastisol as masstone:**

| | Masstone |
|---|---|
| L* | 38.78 |
| a* | 4.08 |
| b* | 7.15 |

### Example 17: CuNa(Sn₃Li)O₈ (not according to the present invention)

The following raw materials in Table 25 are dry mixed, followed by calcining at 900°C for 8 hours in open saggers, followed by wet milling to d₉₀ of 4.3 microns.

**Table 25. Recipe for CuNa(Sn₃Li)O₈:**

| | | |
|---|---|---|
| 5.66 | kg | lithium carbonate |
| 8.12 | kg | sodium carbonate |
| 16.94 | kg | copper hydroxide carbonate |
| 69.28 | kg | tin hydrate sol (27% SnO₂) |

**Table 26. Color values (CIELab D65 10°) of the CuNa(Sn₃Li)O₈ trial measured in Plastisol as masstone:**

| | Masstone |
|---|---|
| L* | 33.65 |
| a* | 0.28 |
| b* | 1.32 |

### Example 18: Li₂(Cr₂Sn₂)O₈ (not according to the present invention)

The following raw materials in Table 27 are dry mixed, followed by calcining at 900°C for 8 hours in open saggers, followed by wet milling to d₉₀ of 4.9 microns.

**Table 27. Recipe for Li₂(Cr₂Sn₂)O₈:**

| | | |
|---|---|---|
| 14.01 | kg | lithium carbonate |
| 28.82 | kg | chrome oxide |
| 57.16 | kg | tin hydrate sol (27% SnO₂) |

**Table 28. Color values (CIELab D65 10°) of the Li₂(Cr₂Sn₂)O₈ trial measured in Plastisol as masstone:**

| | Masstone |
|---|---|
| L* | 51.12 |
| a* | 1.42 |
| b* | 19.86 |

### Example 19: Li₂(Mn₂Sn₂)O₈ (not according to the present invention)

The following raw materials in Table 29 are dry mixed, followed by calcining at 900°C for 8 hours in open saggers, followed by wet milling to d₉₀ of 4.1 microns.

**Table 29. Recipe for Li₂(Mn₂Sn₂)O₈:**

| | | |
|---|---|---|
| 13.45 | kg | lithium carbonate |
| 31.66 | kg | manganese oxide |
| 54.88 | kg | tin hydrate sol (27% SnO₂) |

**Table 30. Color values (CIELab D65 10°) of the Li₂(Mn₂Sn₂)O₈ trial measured in Plastisol as masstone:**

| | Masstone |
|---|---|
| L* | 33.40 |
| a* | 5.88 |
| b* | 7.64 |

### Example 20: Na₂(Fe₂Ti₂)O₈ (not according to the present invention)

The following raw materials in Table 31 are dry mixed, followed by calcining at 900°C for 8 hours in open saggers followed by wet milling to d₉₀ of 4.5 microns.

**Table 31. Recipe for Na₂(Fe₂Ti₂)O₈:**

| | | |
|---|---|---|
| 24.91 | kg | sodium carbonate |
| 37.53 | kg | iron oxide |
| 37.54 | kg | titanium hydrate |

**Table 32. Color values (CIELab D65 10°) of the Na₂(Fe₂Ti₂)O₈ trial measured in Plastisol as masstone:**

| | Masstone |
|---|---|
| L* | 45.00 |
| a* | 21.68 |
| b* | 25.88 |

### Example 21: Na₂(Al₂Ti₂)O₈ (not according to the present invention)

The following raw materials in Table 33 are dry mixed, followed by calcining at 900°C for 8 hours in open saggers, followed by wet milling to d₉₀ of 4.3 microns.

**Table 33 Recipe for Na₂(Al₂Ti₂)O₈:**

| | | |
|---|---|---|
| 36.99 | kg | aluminium hydroxide |
| 37.87 | kg | sodium carbonate |
| 25.13 | kg | titanium dioxide |

**Table 34. Color values (CIELab D65 10°) of the Na₂(Al₂Ti₂)O₈ trial measured in Plastisol as masstone:**

| | Masstone |
|---|---|
| L* | 39.54 |
| a* | 3.65 |
| b* | -1.36 |

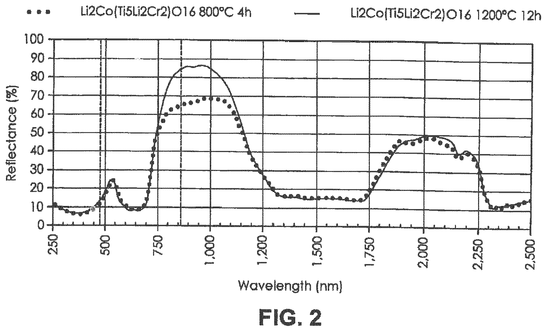

Figure 2 is UV-VIS-NIR Spectra of Li₂Co(Ti₅Li₂Cr₂)O₁₆ from Example 6 calcined at 800°C for 4h and at 1200°C for 12h.

The Total Solar Reflectance (TSR) (over Black) of the compound calcined at 800°C for 4h is 32, while that of the compound calcined at 1200°C for 12h is 37. TSR is measured in accordance with ASTM E903, which is calculated based on standard reference spectral irradiance ASTM G173.

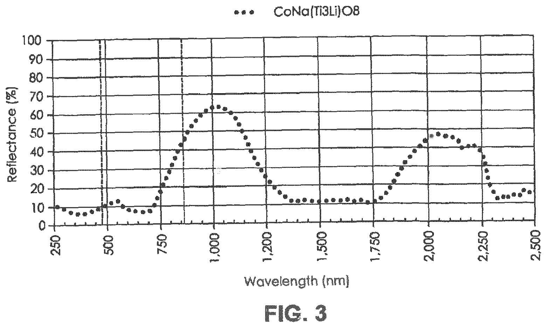

Figure 3 is UV-VIS-NIR Spectra of CoNa(Ti₃Li)O₈ from Example 9.

The measured TSR (over Black) of the compound is 25. TSR is measured in accordance with ASTM E903, which is calculated based on standard reference spectral irradiance ASTM G173.

The subject pigment compositions can exhibit improved solar reflectance properties such that the pigment compositions reflect a relatively high proportion of light having a wavelength between 780 and 2500 nm (i.e., the infrared spectrum), while reflecting a relatively low proportion of light having a wavelength between 380 and 780 nm (i.e., the visible spectrum), which shows either light-tone or dark-tone colors. These unique reflection characteristics enable the preferred pigment compositions to selectively reflect infrared (IR) radiation while not significantly reflecting light within the visible spectrum.

Hence, the inventive pigments exhibit significant reflectance in the near infrared range and relatively low (under 25%) in the visible range. Naturally, as a green pigment, the inventive pigment exhibits a reflectance peak in the 500-550 nm range.

Thus, the pigment compositions maintain their desired appearance and color, e.g., green, while also reflecting significant amounts of IR radiation.

The foregoing and other features of the invention are hereinafter more fully described and particularly pointed out in the claims, the following description setting forth in detail certain illustrative embodiments of the invention, these being indicative, however, of but a few of the various ways in which the principles of the invention may be employed.

In the following, the invention can be summarized as follows:
1. A nickel-free green pigment comprising a solid solution of first and second mixed metal oxides,
   a. the first mixed metal oxide comprising
      i. at least one element A selected from the group consisting of lithium and sodium,
      ii. at least one element B selected from the group consisting of cobalt, zinc, calcium, magnesium, and copper,
      iii. at least one element D selected from the group consisting of titanium, manganese, tin and germanium, and
   b. the second mixed metal oxide comprising
      i. at least one element A selected from the group consisting of lithium and sodium,
      ii. at least one element C selected from the group consisting of chromium, boron, iron, manganese and aluminum and,
      iii. at least one element D selected from the group consisting of titanium, manganese, tin and germanium, and
   c. no nickel.
2. The nickel-free green pigment of item 1, wherein the first mixed metal oxide is a [124] spinel and wherein the second mixed metal oxide is a [134] spinel.
3. The nickel-free green pigment of item 1, wherein the first mixed metal oxide has the formula BA(D₃A)O₈.
4. The nickel-free green pigment of item 1, wherein the second mixed metal oxide has the formula A₂(C₂D₂)O₈.
5. A paint or coating including the nickel-free green pigment of item 1.
6. The nickel-free green pigment of item 1 having a reflection of at least 50% over a wavelength range of 800-1100 nm.
7. The nickel-free green pigment of item 1, having leachable Ni of less than 1 ppm according to DIN EN71/3:2013.
8. A method of making a nickel-free green pigment comprising a solid solution of first and second mixed metal oxides, the method comprising,
   a. mixing particles of
      i. a first mixed metal oxide comprising
         1. at least one element A selected from the group consisting of lithium and sodium,
         2. at least one element B selected from the group consisting of cobalt, zinc, calcium, magnesium, and copper,
         3. at least one element D selected from the group consisting of titanium, manganese, tin and germanium,
         4. no nickel
            with
      ii. a second mixed metal oxide comprising
         1. at least one element A selected from the group consisting of lithium and sodium,
         2. at least one element C selected from the group consisting of chromium, boron, iron, manganese and aluminum, and,
         3. at least one element D selected from the group consisting of titanium, manganese, tin and germanium,
         4. no nickel,
         to form a mixture, and
   b. heating the mixture at a temperature of 800-1700°C for a time of 1 to 1000 minutes to form at least one of particles and agglomerates of a green pigment.
9. The method of item 8, further comprising cooling the green pigment to room temperature at a rate of 1-50°C per minute.
10. The method of item 8, further comprising reducing the size of the pigment particles or agglomerates to a D₅₀ size of 1-10 microns.
11. The method of item 8, wherein the first mixed metal oxide is a [124] spinel and wherein the second mixed metal oxide is a [134] spinel.
12. The method of item 8, wherein the first mixed metal oxide has the formula BA(D₃A)O₈.
13. The method of item 8, wherein the second mixed metal oxide has the formula A₂(C₂D₂)O₈.
14. A method of imparting a green color to a substrate, comprising,
   a. applying to a substrate and
   b. firing
   a nickel-free green pigment comprising a solid solution of first and second mixed metal oxides,
   i. the first mixed metal oxide comprising
      1. at least one element A selected from the group consisting of lithium and sodium,
      2. at least one element B selected from the group consisting of cobalt, zinc, calcium, magnesium, and copper,
      3. at least one element D selected from the group consisting of titanium, manganese, tin and germanium, and
      4. no nickel,
   ii. the second mixed metal oxide comprising
      1. at least one element A selected from the group consisting of lithium and sodium,
      2. at least one element C selected from the group consisting of chromium, boron, iron, manganese and aluminum and,
      3. at least one element D selected from the group consisting of titanium, manganese, tin and germanium, and
      4. no nickel.
15. The method of item 14, wherein the first mixed metal oxide is a [124] spinel and wherein the second mixed metal oxide is a [134] spinel.
16. The method of item 14, wherein the first mixed metal oxide has the formula BA(D₃A)O₈.
17. The method of item 14, wherein the second mixed metal oxide has the formula A₂(C₂D₂)O₈.
18. A method of imparting a green color to a plastic composition, comprising, melt mixing
   a. a plastic composition, with
   b. a nickel-free green pigment comprising a solid solution of first and second mixed metal oxides,
      i. the first mixed metal oxide comprising
         1. at least one element A selected from the group consisting of lithium and sodium,
         2. at least one element B selected from the group consisting of cobalt, zinc, calcium, magnesium, and copper,
         3. at least one element D selected from the group consisting of titanium, manganese, tin and germanium, and
         4. no nickel,
      ii. the second mixed metal oxide comprising
         1. at least one element A selected from the group consisting of lithium and sodium,
         2. at least one element C selected from the group consisting of chromium, boron, iron, manganese and aluminum,
         3. at least one element D selected from the group consisting of titanium, manganese, tin and germanium, and
         4. no nickel.
19. The method of item 18, wherein the first mixed metal oxide is a [124] spinel and wherein the second mixed metal oxide is a [134] spinel.
20. The method of item 18, wherein the first mixed metal oxide has the formula BA(D₃A)O₈.
21. The method of item 18, wherein the second mixed metal oxide has the formula A₂(C₂D₂)O₈·
22. The nickel-free green pigment of item 1, wherein the pigment includes a first mixed metal oxide selected from the group consisting of CoLi(Ti₃Li)O₈, CoLi(Ti₃Na)O₈, CoLi(Mn₃Li)O₈, CoLi(Ti₃Li)O₈, CoLi(Ge₃Li)O₈, CoLi(Mn₃Na)O₈, CoLi(Ti₃Na)O₈, CoLi(Ge₃Na)O₈, CoLi(Sn₃Li)O₈, CoLi(Sn₃Na)O₈, CoNa(Ti₃Li)O₈, CoNa(Ti₃Na)O₈, CoNa(Mn₃Li)O₈, CoNa(Ti₃Li)O₈, CoNa(Ge₃Li)O₈, CoNa(Mn₃Na)O₈, CoNa(Ti₃Na)O₈,CoNa(Ge₃Na)O₈, CoNa(Sn₃Li)O₈,CoNa(Sn₃Na)O₈, ZnLi(Ti₃Li)O₈, ZnLi(Ti₃Na)O₈, ZnLi(Mn₃Li)O₈, ZnLi(Ti₃Li)O₈, ZnLi(Ge₃Li)O₈, ZnLi(Mn₃Na)O₈, ZnLi(Ti₃Na)O₈, ZnLi(Ge₃Na)O₈, ZnLi(Sn₃Li)O₈, ZnLi(Sn₃Na)O₈, ZnNa(Ti₃Li)O₈, ZnNa(Ti₃Na)O₈, ZnNa(Mn₃Li)O₈, ZnNa(Ti₃Li)O₈, ZnNa(Ge₃Li)O₈, ZnNa(Mn₃Na)O₈, ZnNa(Ti₃Na)O₈, ZnNa(Ge₃Na)O₈, ZnNa(Sn₃Li)O₈, ZnNa(Sn₃Na)O₈, CaLi(Ti₃Li)O₈, CaLi(Ti₃Na)O₈, CaLi(Mn₃Li)O₈, CaLi(Ti₃Li)O₈, CaLi(Ge₃Li)O₈, CaLi(Mn₃Na)O₈, CaLi(Ti₃Na)O₈, CaLi(Ge₃Na)O₈, CaLi(Sn₃Li)O₈, CaLi(Sn₃Na)O₈, CaNa(Ti₃Li)O₈, CaNa(Ti₃Na)O₈, CaNa(Mn₃Li)O₈, CaNa(Ti₃Li)O₈, CaNa(Ge₃Li)O₈, CaNa(Mn₃Na)O₈, CaNa(Ti₃Na)O₈, CaNa(Ge₃Na)O₈, CaNa(Sn₃Li)O₈, CaNa(Sn₃Na)O₈, MgLi(Ti₃Li)O₈, MgLi(Ti₃Na)O₈, MgLi(Mn₃Li)O₈, MgLi(Ti₃Li)O₈, MgLi(Ge₃Li)O₈, MgLi(Mn₃Na)O₈, MgLi(Ti₃Na)O₈, MgLi(Ge₃Na)O₈, MgLi(Sn₃Li)O₈, MgLi(Sn₃Na)O₈, MgNa(Ti₃Li)O₈, MgNa(Ti₃Na)O₈, MgNa(Mn₃Li)O₈, MgNa(Ti₃Li)O₈, MgNa(Ge₃Li)O₈, MgNa(Mn₃Na)O₈, MgNa(Ti₃Na)O₈, MgNa(Ge₃Na)O₈, MgNa(Sn₃Li)O₈, MgNa(Sn₃Na)O₈, CuLi(Ti₃Li)O₈, CuLi(Ti₃Na)O₈, CuLi(Mn₃Li)O₈, CuLi(Ti₃Li)O₈, CuLi(Ge₃Li)O₈, CuLi(Mn₃Na)O₈, CuLi(Ti₃Na)O₈, CuLi(Ge₃Na)O₈, CuLi(Sn₃Li)O₈, CuLi(Sn₃Na)O₈, CuNa(Ti₃Li)O₈, CuNa(Ti₃Na)O₈, CuNa(Mn₃Li)O₈, CuNa(Ti₃Li)O₈, CuNa(Ge₃Li)O₈, CuNa(Mn₃Na)O₈, CuNa(Ti₃Na)O₈, CuNa(Ge₃Na)O₈, CuNa(Sn₃Li)O₈, CuNa(Sn₃Na)O₈ and combinations thereof.
23. The nickel-free green pigment of items 1 or 22, wherein the pigment includes a first mixed metal oxide selected from the group consisting of Li₂(Cr₂Ti₂)O₈, Li₂(Cr₂Mn₂)O₈, Li₂(Cr₂Sn₂)O₈, Li₂(Cr₂Ge₂)O₈, Li₂(B₂Ti₂)O₈, Li₂(B₂Mn₂)O₈, Li₂(B₂Sn₂)O₈, Li₂(B₂Ge₂)O₈, Li₂(Fe₂Ti₂)O₈, Li₂(Fe₂Mn₂)O₈, Li₂(Fe₂Sn₂)O₈, Li₂(Fe₂Ge₂)O₈, Li₂(Mn₂Ti₂)O₈, Li₂(Mn₂Sn₂)O₈, Li₂(Mn₂Ge₂)O₈, Li₂(Al₂Ti₂)O₈, Li₂(Al₂Mn₂)O₈, Li₂(Al₂Sn₂)O₈, Li₂(Al₂Ge₂)O₈, Na₂(Cr₂Ti₂)O₈, Na₂(Cr₂Mn₂)O₈, Na₂(Cr₂Ge₂)O₈, Na₂(Cr₂Sn₂)O₈, Na₂(B₂Ti₂)O₈, Na₂(B₂Mn₂)O₈, Na₂(B₂Ge₂)O₈, Na₂(B₂Sn₂)O₈, Na₂(Fe₂Ti₂)O₈, Na₂(Fe₂Mn₂)O₈, Na₂(Fe₂Ge₂)O₈, Na₂(Sn₂Mn₂)O₈, Na₂(Mn₂Ti₂)O₈, Na₂(Mn₂Ge₂)O₈, Na₂(Al₂Ti₂)O₈, Na₂(Al₂Mn₂)O₈, Na₂(Al₂Sn₂)O₈, and Na₂(Al₂Ge₂)O₈ and combinations thereof.

## Claims

1. A nickel-free green pigment comprising a solid solution of first and second mixed metal oxides,
a. the first mixed metal oxide comprising
i. at least one element A selected from the group consisting of lithium and sodium,
ii. at least one element B selected from the group consisting of cobalt, zinc, calcium, magnesium, and copper,
iii. at least one element D selected from the group consisting of titanium, manganese, tin and germanium, and
b. the second mixed metal oxide comprising
i. at least one element A selected from the group consisting of lithium and sodium,
ii. at least one element C selected from the group consisting of chromium, boron, iron, manganese and aluminum and,
iii. at least one element D selected from the group consisting of titanium, manganese, tin and germanium, and
c. no nickel.

2. The nickel-free green pigment of claim 1, wherein the first mixed metal oxide is a [124] spinel and wherein the second mixed metal oxide is a [134] spinel.

3. The nickel-free green pigment of claim 1, wherein the first mixed metal oxide has the formula BA(D₃A)O₈.

4. The nickel-free green pigment of claim 1, wherein the second mixed metal oxide has the formula A₂(C₂D₂)O₈.

5. A paint or coating including the nickel-free green pigment of claim 1.

6. A method of making a nickel-free green pigment comprising a solid solution of first and second mixed metal oxides, the method comprising,
a. mixing particles of
i. a first mixed metal oxide comprising
1. at least one element A selected from the group consisting of lithium and sodium,
2. at least one element B selected from the group consisting of cobalt, zinc, calcium, magnesium, and copper,
3. at least one element D selected from the group consisting of titanium, manganese, tin and germanium,
4. no nickel
with
ii. a second mixed metal oxide comprising
1. at least one element A selected from the group consisting of lithium and sodium,
2. at least one element C selected from the group consisting of chromium, boron, iron, manganese and aluminum, and,
3. at least one element D selected from the group consisting of titanium, manganese, tin and germanium,
4. no nickel,
to form a mixture, and
b. heating the mixture at a temperature of 800-1700°C for a time of 1 to 1000 minutes to form at least one of particles and agglomerates of a green pigment.

7. The method of claim 6, further comprising cooling the green pigment to room temperature at a rate of 1-50°C per minute.

8. The method of claim 6, further comprising reducing the size of the pigment particles or agglomerates to a d₅₀ size of 1-10 microns.

9. The method of claim 6, wherein the first mixed metal oxide is a [124] spinel and wherein the second mixed metal oxide is a [134] spinel.

10. A method of imparting a green color to a substrate, comprising,
a. applying to a substrate and
b. firing
a nickel-free green pigment comprising a solid solution of first and second mixed metal oxides,
i. the first mixed metal oxide comprising
1. at least one element A selected from the group consisting of lithium and sodium,
2. at least one element B selected from the group consisting of cobalt, zinc, calcium, magnesium, and copper,
3. at least one element D selected from the group consisting of titanium, manganese, tin and germanium, and
4. no nickel,
ii. the second mixed metal oxide comprising
1. at least one element A selected from the group consisting of lithium and sodium,
2. at least one element C selected from the group consisting of chromium, boron, iron, manganese and aluminum and,
3. at least one element D selected from the group consisting of titanium, manganese, tin and germanium, and
4. no nickel.

11. The method of claim 10, wherein the first mixed metal oxide is a [124] spinel and wherein the second mixed metal oxide is a [134] spinel.

12. A method of imparting a green color to a plastic composition, comprising, melt mixing
a. a plastic composition, with
b. a nickel-free green pigment comprising a solid solution of first and second mixed metal oxides,
i. the first mixed metal oxide comprising
1. at least one element A selected from the group consisting of lithium and sodium,
2. at least one element B selected from the group consisting of cobalt, zinc, calcium, magnesium, and copper,
3. at least one element D selected from the group consisting of titanium, manganese, tin and germanium, and
4. no nickel,
ii. the second mixed metal oxide comprising
1. at least one element A selected from the group consisting of lithium and sodium,
2. at least one element C selected from the group consisting of chromium, boron, iron, manganese and aluminum,
3. at least one element D selected from the group consisting of titanium, manganese, tin and germanium, and
4. no nickel.

13. The method of claim 12, wherein the first mixed metal oxide is a [124] spinel and wherein the second mixed metal oxide is a [134] spinel.

14. The nickel-free green pigment of claim 1, wherein the pigment includes a first mixed metal oxide selected from the group consisting of CoLi(Ti₃Li)O₈, CoLi(Ti₃Na)O₈, CoLi(Mn₃Li)O₈, CoLi(Ti₃Li)O₈, CoLi(Ge₃Li)O₈, CoLi(Mn₃Na)O₈, CoLi(Ti₃Na)O₈, CoLi(Ge₃Na)O₈, CoLi(Sn₃Li)O₈, CoLi(Sn₃Na)O₈, CoNa(Ti₃Li)O₈, CoNa(Ti₃Na)O₈, CoNa(Mn₃Li)O₈, CoNa(Ti₃Li)O₈, CoNa(Ge₃Li)O₈, CoNa(Mn₃Na)O₈, CoNa(Ti₃Na)O₈, CoNa(Ge₃Na)O₈, CoNa(Sn₃Li)O₈,CoNa(Sn₃Na)O₈, ZnLi(Ti₃Li)O₈, ZnLi(Ti₃Na)O₈, ZnLi(Mn₃Li)O₈, ZnLi(Ti₃Li)O₈, ZnLi(Ge₃Li)O₈, ZnLi(Mn₃Na)O₈, ZnLi(Ti₃Na)O₈, ZnLi(Ge₃Na)O₈, ZnLi(Sn₃Li)O₈, ZnLi(Sn₃Na)O₈, ZnNa(Ti₃Li)O₈, ZnNa(Ti₃Na)O₈, ZnNa(Mn₃Li)O₈, ZnNa(Ti₃Li)O₈, ZnNa(Ge₃Li)O₈, ZnNa(Mn₃Na)O₈, ZnNa(Ti₃Na)O₈, ZnNa(Ge₃Na)O₈, ZnNa(Sn₃Li)O₈, ZnNa(Sn₃Na)O₈, CaLi(Ti₃Li)O₈, CaLi(Ti₃Na)O₈, CaLi(Mn₃Li)O₈, CaLi(Ti₃Li)O₈, CaLi(Ge₃Li)O₈, CaLi(Mn₃Na)O₈, CaLi(Ti₃Na)O₈, CaLi(Ge₃Na)O₈, CaLi(Sn₃Li)O₈, CaLi(Sn₃Na)O₈, CaNa(Ti₃Li)O₈, CaNa(Ti₃Na)O₈, CaNa(Mn₃Li)O₈, CaNa(Ti₃Li)O₈, CaNa(Ge₃Li)O₈, CaNa(Mn₃Na)O₈, CaNa(Ti₃Na)O₈, CaNa(Ge₃Na)O₈, CaNa(Sn₃Li)O₈, CaNa(Sn₃Na)O₈, MgLi(Ti₃Li)O₈, MgLi(Ti₃Na)O₈, MgLi(Mn₃Li)O₈, MgLi(Ti₃Li)O₈, MgLi(Ge₃Li)O₈, MgLi(Mn₃Na)O₈, MgLi(Ti₃Na)O₈, MgLi(Ge₃Na)O₈, MgLi(Sn₃Li)O₈, MgLi(Sn₃Na)O₈, MgNa(Ti₃Li)O₈, MgNa(Ti₃Na)O₈, MgNa(Mn₃Li)O₈, MgNa(Ti₃Li)O₈, MgNa(Ge₃Li)O₈, MgNa(Mn₃Na)O₈, MgNa(Ti₃Na)O₈, MgNa(Ge₃Na)O₈, MgNa(Sn₃Li)O₈, MgNa(Sn₃Na)O₈, CuLi(Ti₃Li)O₈, CuLi(Ti₃Na)O₈, CuLi(Mn₃Li)O₈, CuLi(Ti₃Li)O₈, CuLi(Ge₃Li)O₈, CuLi(Mn₃Na)O₈, CuLi(Ti₃Na)O₈, CuLi(Ge₃Na)O₈, CuLi(Sn₃Li)O₈, CuLi(Sn₃Na)O₈, CuNa(Ti₃Li)O₈, CuNa(Ti₃Na)O₈, CuNa(Mn₃Li)O₈, CuNa(Ti₃Li)O₈, CuNa(Ge₃Li)O₈, CuNa(Mn₃Na)O₈, CuNa(Ti₃Na)O₈, CuNa(Ge₃Na)O₈, CuNa(Sn₃Li)O₈, CuNa(Sn₃Na)O₈ and combinations thereof.

15. The nickel-free green pigment of claims 1 wherein the pigment includes a first mixed metal oxide selected from the group consisting of Li₂(Cr₂Ti₂)O₈, Li₂(Cr₂Mn₂)O₈, Li₂(Cr₂Sn₂)O₈, Li₂(Cr₂Ge₂)O₈, Li₂(B₂Ti₂)O₈, Li₂(B₂Mn₂)O₈, Li₂(B₂Sn₂)O₈, Li₂(B₂Ge₂)O₈, Li₂(Fe₂Ti₂)O₈, Li₂(Fe₂Mn₂)O₈, Li₂(Fe₂Sn₂)O₈, Li₂(Fe₂Ge₂)O₈, Li₂(Mn₂Ti₂)O₈, Li₂(Mn₂Sn₂)O₈, Li₂(Mn₂Ge₂)O₈, Li₂(Al₂Ti₂)O₈, Li₂(Al₂Mn₂)O₈, Li₂(Al₂Sn₂)O₈, Li₂(Al₂Ge₂)O₈, Na₂(Cr₂Ti₂)O₈, Na₂(Cr₂Mn₂)O₈, Na₂(Cr₂Ge₂)O₈, Na₂(Cr₂Sn₂)O₈, Na₂(B₂Ti₂)O₈, Na₂(B₂Mn₂)O₈, Na₂(B₂Ge₂)O₈, Na₂(B₂Sn₂)O₈, Na₂(Fe₂Ti₂)O₈, Na₂(Fe₂Mn₂)O₆, Na₂(Fe₂Ge₂)O₈, Na₂(Sn₂Mn₂)O₈, Na₂(Mn₂Ti₂)O₈, Na₂(Mn₂Ge₂)O₈, Na₂(Al₂Ti₂)O₈, Na₂(Al₂Mn₂)O₈, Na₂(Al₂Sn₂)O₈, and Na₂(Al₂Ge₂)O₈ and combinations thereof.

## Patentansprüche

1. Nickelfreies grünes Pigment mit einem Mischkristall aus einem ersten und zweiten Mischmetalloxid,
a. wobei das erste Mischmetalloxid aufweist:
i. zumindest ein Element A, das ausgewählt ist aus der Gruppe, die aus Lithium und Natrium besteht,
ii. zumindest ein Element B, das ausgewählt ist aus der Gruppe, die aus Kobalt, Zink, Calcium, Magnesium und Kupfer besteht,
iii. zumindest ein Element D, das ausgewählt ist aus der Gruppe, die aus Titan, Mangan, Zinn und Germanium besteht, und
b. wobei das zweite Mischmetalloxid aufweist:
i. zumindest ein Element A, das ausgewählt ist aus der Gruppe, die aus Lithium und Natrium besteht,
ii. zumindest ein Element C, das ausgewählt ist aus der Gruppe, die aus Chrom, Bor, Eisen, Mangan und Aluminium besteht, und
iii. zumindest ein Element D, das ausgewählt ist aus der Gruppe, die aus Titan, Mangan, Zinn und Germanium besteht, und
c. kein Nickel.

2. Nickelfreies grünes Pigment gemäß Anspruch 1, wobei das erste Mischmetalloxid ein [124] Spinell ist und wobei das zweite Mischmetalloxid ein [134] Spinell ist.

3. Nickelfreies grünes Pigment gemäß Anspruch 1, wobei das erste Mischmetalloxid die Formel BA(D₃A)O₈ aufweist.

4. Nickelfreies grünes Pigment gemäß Anspruch 1, wobei das zweite Mischmetalloxid die Formel A₂(C₂D₂)O₈ aufweist.

5. Farbe oder Beschichtung, welche das nickelfreie grüne Pigment gemäß Anspruch 1 aufweist.

6. Verfahren zur Herstellung eines nickelfreien grünen Pigments, das ein Mischkristall aus einem ersten und zweiten Mischmetalloxid aufweist, wobei das Verfahren aufweist:
a. das Mischen von Partikeln aus
i. einem ersten Mischmetalloxid aufweisend
1. zumindest ein Element A, das ausgewählt ist aus der Gruppe, die aus Lithium und Natrium besteht,
2. zumindest ein Element B, das ausgewählt ist aus der Gruppe, die aus Kobalt, Zink, Calcium, Magnesium und Kupfer besteht,
3. zumindest ein Element D, das ausgewählt ist aus der Gruppe, die aus Titan, Mangan, Zinn und Germanium besteht,
4. kein Nickel
mit
ii. einem zweiten Mischmetalloxid aufweisend
1. zumindest ein Element A, das ausgewählt ist aus der Gruppe, die aus Lithium und Natrium besteht,
2. zumindest ein Element C, das ausgewählt ist aus der Gruppe, die aus Chrom, Bor, Eisen, Mangan und Aluminium besteht, und
3. zumindest ein Element D, das ausgewählt ist aus der Gruppe, die aus Titan, Mangan, Zinn und Germanium besteht,
4. kein Nickel,
zur Bildung eines Gemisches, und
b. Erhitzen des Gemisches auf eine Temperatur von 800 - 1700°C über eine Zeit von 1 bis 1000 Minuten zur Bildung wenigstens einer Form aus Partikeln und Agglomeraten eines grünen Pigments.

7. Verfahren gemäß Anspruch 6, ferner umfassend das Abkühlen des grünen Pigments auf Raumtemperatur mit einer Geschwindigkeit von 1-50°C pro Minute.

8. Verfahren gemäß Anspruch 6, ferner umfassend das Verringern der Größe der Pigmentpartikel oder Pigmentagglomerate auf eine d₅₀-Größe von 1-10 Mikrometer.

9. Verfahren gemäß Anspruch 6, wobei das erste Mischmetalloxid ein [124] Spinell ist und wobei das zweite Mischmetalloxid ein [134] Spinell ist.

10. Verfahren zum Aufbringen einer grünen Farbe auf ein Substrat, aufweisend:
a. Aufbringen auf ein Substrat und
b. Brennen
eines nickelfreien grünen Pigments mit einem Mischkristall aus einem ersten und zweiten Mischmetalloxid,
i. wobei das erste Mischmetalloxid aufweist
1. zumindest ein Element A, das ausgewählt ist aus der Gruppe, die aus Lithium und Natrium besteht,
2. zumindest ein Element B, das ausgewählt ist aus der Gruppe, die aus Kobalt, Zink, Calcium, Magnesium und Kupfer besteht,
3. zumindest ein Element D, das ausgewählt ist aus der Gruppe, die aus Titan, Mangan, Zinn und Germanium besteht, und
4. kein Nickel
ii. wobei das zweite Mischmetalloxid aufweist
1. zumindest ein Element A, das ausgewählt ist aus der Gruppe, die aus Lithium und Natrium besteht,
2. zumindest ein Element C, das ausgewählt ist aus der Gruppe, die aus Chrom, Bor, Eisen, Mangan und Aluminium besteht, und
3. zumindest ein Element D, das ausgewählt ist aus der Gruppe, die aus Titan, Mangan, Zinn und Germanium besteht, und
4. kein Nickel.

11. Verfahren gemäß Anspruch 10, wobei das erste Mischmetalloxid ein [124] Spinell ist und wobei das zweite Mischmetalloxid ein [134] Spinell ist.

12. Verfahren zum Aufbringen einer grünen Farbe auf eine Kunststoffverbindung, aufweisend die Schmelzvermischung
a. einer Kunststoffverbindung mit
b. einem nickelfreien grünen Pigment mit einem Mischkristall aus einem ersten und zweiten Mischmetalloxid,
i. wobei das erste Mischmetalloxid aufweist
1. zumindest ein Element A, das ausgewählt ist aus der Gruppe, die aus Lithium und Natrium besteht,
2. zumindest ein Element B, das ausgewählt ist aus der Gruppe, die aus Kobalt, Zink, Calcium, Magnesium und Kupfer besteht,
3. zumindest ein Element D, das ausgewählt ist aus der Gruppe, die aus Titan, Mangan, Zinn und Germanium besteht, und
4. kein Nickel
ii. wobei das zweite Mischmetalloxid aufweist
1. zumindest ein Element A, das ausgewählt ist aus der Gruppe, die aus Lithium und Natrium besteht,
2. zumindest ein Element C, das ausgewählt ist aus der Gruppe, die aus Chrom, Bor, Eisen, Mangan und Aluminium besteht,
3. zumindest ein Element D, das ausgewählt ist aus der Gruppe, die aus Titan, Mangan, Zinn und Germanium besteht, und
4. kein Nickel.

13. Verfahren gemäß Anspruch 12, wobei das erste Mischmetalloxid ein [124] Spinell ist und wobei das zweite Mischmetalloxid ein [134] Spinell ist.

14. Nickelfreies grünes Pigment gemäß Anspruch 1, wobei das Pigment ein erstes Mischmetalloxid umfasst, das ausgewählt ist aus der Gruppe, die aus CoLi(Ti₃Li)O₈, CoLi(Ti₃Na)O₈, CoLi(Mn₃Li)O₈, CoLi(Ti₃Li)O₈, CoLi(Ge₃Li)O₈, CoLi(Mn₃Na)O₈, CoLi(Ti₃Na)O₈, CoLi(Ge₃Na)O₈, CoLi(Sn₃Li)O₈, CoLi(Sn₃Na)O₈, CoNa(Ti₃Li)O₈, CoNa(Ti₃Na)O₈, CoNa(Mn₃Li)O₈, CoNa(Ti₃Li)O₈, CoNa(Ge₃Li)O₈, CoNa(Mn₃Na)O₈, CoNa(Ti₃Na)O₈, CoNa(Ge₃Na)O₈, CoNa(Sn₃Li)O₈, CoNa(Sn₃Na)O₈, ZnLi(Ti₃Li)O₈, ZnLi(Ti₃Na)O₈, ZnLi(Mn₃Li)O₈, ZnLi(Ti₃Li)O₈, ZnLi(Ge₃Li)O₈, ZnLi(Mn₃Na)O₈, ZnLi(Ti₃Na)O₈, ZnLi(Ge₃Na)O₈, ZnLi(Sn₃Li)O₈, ZnLi(Sn₃Na)O₈, ZnNa(Ti₃Li)O₈, ZnNa(Ti₃Na)O₈, ZnNa(Mn₃Li)O₈, ZnNa(Ti₃Li)O₈, ZnNa(Ge₃Li)O₈, ZnNa(Mn₃Na)O₈, ZnNa(Ti₃Na)O₈, ZnNa(Ge₃Na)O₈, ZnNa(Sn₃Li)O₈, ZnNa(Sn₃Na)O₈, CaLi(Ti₃Li)O₈, CaLi(Ti₃Na)O₈, CaLi(Mn₃Li)O₈, CaLi(Ti₃Li)O₈, CaLi(Ge₃Li)O₈, CaLi(Mn₃Na)O₈, CaLi(Ti₃Na)O₈, CaLi(Ge₃Na)O₈, CaLi(Sn₃Li)O₈, CaLi(Sn₃Na)O₈, CaNa(Ti₃Li)O₈, CaNa(Ti₃Na)O₈, CaNa(Mn₃Li)O₈, CaNa(Ti₃Li)O₈, CaNa(Ge₃Li)O₈, CaNa(Mn₃Na)O₈, CaNa(Ti₃Na)O₈, CaNa(Ge₃Na)O₈, CaNa(Sn₃Li)O₈, CaNa(Sn₃Na)O₈, MgLi(Ti₃Li)O₈, MgLi(Ti₃Na)O₈, MgLi(Mn₃Li)O₈, MgLi(Ti₃Li)O₈, MgLi(Ge₃Li)O₈, MgLi(Mn₃Na)O₈, MgLi(Ti₃Na)O₈, MgLi(Ge₃Na)O₈, MgLi(Sn₃Li)O₈, MgLi(Sn₃Na)O₈, MgNa(Ti₃Li)O₈, MgNa(Ti₃Na)O₈, MgNa(Mn₃Li)O₈, MgNa(Ti₃Li)O₈, MgNa(Ge₃Li)O₈, MgNa(Mn₃Na)O₈, MgNa(Ti₃Na)O₈, MgNa(Ge₃Na)O₈, MgNa(Sn₃Li)O₈, MgNa(Sn₃Na)O₈, CuLi(Ti₃Li)O₈, CuLi(Ti₃Na)O₈, CuLi(Mn₃Li)O₈, CuLi(Ti₃Li)O₈, CuLi(Ge₃Li)O₈, CuLi(Mn₃Na)O₈, CuLi(Ti₃Na)O₈, CuLi(Ge₃Na)O₈, CuLi(Sn₃Li)O₈, CuLi(Sn₃Na)O₈, CuNa(Ti₃Li)O₈, CuNa(Ti₃Na)O₈, CuNa(Mn₃Li)O₈, CuNa(Ti₃Li)O₈, CuNa(Ge₃Li)O₈, CuNa(Mn₃Na)O₈, CuNa(Ti₃Na)O₈, CuNa(Ge₃Na)O₈, CuNa(Sn₃Li)O₈, CuNa(Sn₃Na)O₈ und Kombinationen daraus besteht.

15. Nickelfreies grünes Pigment gemäß Anspruch 1, wobei das Pigment ein erstes Mischmetalloxid umfasst, das ausgewählt ist aus der Gruppe, die aus Li₂(Cr₂Ti₂)O₈, Li₂(Cr₂Mn₂)O₈, Li₂(Cr₂Sn₂)O₈, Li₂(Cr₂Ge₂)O₈, Li₂(B₂Ti₂)O₈, Li₂(B₂Mn₂)O₈, Li₂(B₂Sn₂)O₈, Li₂(B₂Ge₂)O₈, Li₂(Fe₂Ti₂)O₈, Li₂(Fe₂Mn₂)O₈, Li₂(Fe₂Sn₂)O₈, Li₂(Fe₂Ge₂)O₈, Li₂(Mn₂Ti₂)O₈, Li₂(Mn₂Sn₂)O₈, Li₂(Mn₂Ge₂)O₈, Li₂(Al₂Ti₂)O₈, Li₂(Al₂Mn₂)O₈, Li₂(Al₂Sn₂)O₈, Li₂(Al₂Ge₂)O₈, Na₂(Cr₂Ti₂)O₈, Na₂(Cr₂Mn₂)O₈, Na₂(Cr₂Ge₂)O₈, Na₂(Cr₂Sn₂)O₈, Na₂(B₂Ti₂)O₈, Na₂(B₂Mn₂)O₈, Na₂(B₂Ge₂)O₈, Na₂(B₂Sn₂)O₈, Na₂(Fe₂Ti₂)O₈, Na₂(Fe₂Mn₂)O₈, Na₂(Fe₂Ge₂)O₈, Na₂(Sn₂Mn₂)O₈, Na₂(Mn₂Ti₂)O₈, Na₂(Mn₂Ge₂)O₈, Na₂(Al₂Ti₂)O₈, Na₂(Al₂Mn₂)O₈, Na₂(Al₂Sn₂)O₈, und Na₂(Al₂Ge₂)O₈ und Kombinationen daraus besteht.

## Revendications

1. Pigment vert dépourvu de nickel et comprenant une solution solide composée d'un premier oxyde métallique mixte et d'un deuxième oxyde métallique mixte,
a. le premier oxyde métallique mixte comprenant
i. au moins un élément A sélectionné dans le groupe composé de lithium et de sodium,
ii. au moins un élément B sélectionné dans le groupe composé de cobalt, de zinc, de calcium, de magnésium et de cuivre,
iii. au moins un élément D sélectionné dans le groupe composé de titane, de manganèse, d'étain et de germanium, et
b. le deuxième oxyde métallique mixte comprenant
i. au moins un élément A sélectionné dans le groupe composé de lithium et de sodium,
ii. au moins un élément C sélectionné dans le groupe composé de chrome, de bore, de fer, de manganèse et d'aluminium et
iii. au moins un élément D sélectionné dans le groupe composé de titane, de manganèse, d'étain et de germanium, et
c. aucun nickel.

2. Pigment vert dépourvu de nickel selon la revendication 1, dans lequel le premier oxyde métallique mixte est un spinelle [124] et dans lequel le deuxième oxyde métallique mixte est un spinelle [134].

3. Pigment vert dépourvu de nickel selon la revendication 1, dans lequel le premier oxyde métallique mixte comprend la formule BA(D₃A)O₈.

4. Pigment vert dépourvu de nickel selon la revendication 1, dans lequel le deuxième oxyde métallique mixte comprend la formule A₂(C₂D₂)O₈

5. Peinture ou revêtement comprenant le pigment vert dépourvu de nickel selon la revendication 1.

6. Procédé de fabrication d'un pigment vert dépourvu de nickel comprenant une solution solide composée d'un premier oxyde métallique mixte et d'un deuxième oxyde métallique mixte, le procédé comprenant :
a. l'étape de mélanger des particules de
i. un premier oxyde métallique mixte comprenant
1. au moins un élément A sélectionné dans le groupe composé de lithium et de sodium,
2. au moins un élément B sélectionné dans le groupe composé de cobalt, de zinc, de calcium, de magnésium et de cuivre,
3. au moins un élément D sélectionné dans le groupe composé de titane, de manganèse, d'étain et de germanium,
4. aucun nickel
avec
ii. un deuxième oxyde métallique mixte comprenant
1. au moins un élément A sélectionné dans le groupe composé de lithium et de sodium,
2. au moins un élément C sélectionné dans le groupe composé de chrome, de bore, de fer, de manganèse et d'aluminium et
3. au moins un élément D sélectionné dans le groupe composé de titane, de manganèse, d'étain et de germanium,
4. aucun nickel,
pour former un mélange, et
b. l'étape de chauffer le mélange à une température comprise entre 800 et 1700°C pendant une période de 1 à 1000 minutes pour former au moins l'un parmi des particules et des agglomérats d'un pigment vert.

7. Procédé selon la revendication 6, comprenant en outre l'étape de refroidir le pigment vert à la température ambiante à un taux de 1-50°C par minute.

8. Procédé selon la revendication 6, comprenant en outre l'étape de réduire la taille des particules ou des agglomérats de pigment à une taille d₅₀ comprise entre 1 et 10 microns.

9. Procédé selon la revendication 6, dans lequel le premier oxyde métallique mixte est un spinelle [124] et dans lequel le deuxième oxyde métallique mixte est un spinelle [134].

10. Procédé d'application d'une couleur verte sur un substrat, comprenant les étapes de :
a. appliquer à un substrat et
b. cuir
un pigment vert dépourvu de nickel et comprenant une solution solide composée d'un premier oxyde métallique mixte et d'un deuxième oxyde métallique mixte,
i. le premier oxyde métallique mixte comprenant
1. au moins un élément A sélectionné dans le groupe composé de lithium et de sodium,
2. au moins un élément B sélectionné dans le groupe composé de cobalt, de zinc, de calcium, de magnésium et de cuivre,
3. au moins un élément D sélectionné dans le groupe composé de titane, de manganèse, d'étain et de germanium, et
4. aucun nickel
ii. le deuxième oxyde métallique mixte comprenant
1. au moins un élément A sélectionné dans le groupe composé de lithium et de sodium,
2. au moins un élément C sélectionné dans le groupe composé de chrome, de bore, de fer, de manganèse et d'aluminium et
3. au moins un élément D sélectionné dans le groupe composé de titane, de manganèse, d'étain et de germanium, et
4. aucun nickel.

11. Procédé selon la revendication 10, dans lequel le premier oxyde métallique mixte est un spinelle [124] et dans lequel le deuxième oxyde métallique mixte est un spinelle [134].

12. Procédé d'application d'une couleur verte sur une composition plastique, comprenant l'étape de mélange en fusion
a. d'une composition plastique avec
un pigment vert dépourvu de nickel et comprenant une solution solide composée d'un premier oxyde métallique mixte et d'un deuxième oxyde métallique mixte,
i. le premier oxyde métallique mixte comprenant
1. au moins un élément A sélectionné dans le groupe composé de lithium et de sodium,
2. au moins un élément B sélectionné dans le groupe composé de cobalt, de zinc, de calcium, de magnésium et de cuivre,
3. au moins un élément D sélectionné dans le groupe composé de titane, de manganèse, d'étain et de germanium, et
4. aucun nickel
ii. le deuxième oxyde métallique mixte comprenant
1. au moins un élément A sélectionné dans le groupe composé de lithium et de sodium,
2. au moins un élément C sélectionné dans le groupe composé de chrome, de bore, de fer, de manganèse et d'aluminium,
3. au moins un élément D sélectionné dans le groupe composé de titane, de manganèse, d'étain et de germanium, et
4. aucun nickel.

13. Procédé selon la revendication 12, dans lequel le premier oxyde métallique mixte est un spinelle [124] et dans lequel le deuxième oxyde métallique mixte est un spinelle [134].

14. Pigment vert dépourvu de nickel selon la revendication 1, dans lequel le pigment comprend un premier oxyde métallique mixte sélectionné dans le groupe composé de CoLi(Ti₃Li)O₈, CoLi(Ti₃Na)O₈, CoLi(Mn₃Li)O₈, CoLi(Ti₃Li)O₈, CoLi(Ge₃Li)O₈, CoLi(Mn₃Na)O₈, CoLi(Ti₃Na)O₈, CoLi(Ge₃Na)O₈, CoLi(Sn₃Li)O₈, CoLi(Sn₃Na)O₈, CoNa(Ti₃Li)O₈, CoNa(Ti₃Na)O₈, CoNa(Mn₃Li)O₈, CoNa(Ti₃Li)O₈, CoNa(Ge₃Li)O₈, CoNa(Mn₃Na)O₈, CoNa(Ti₃Na)O₈, CoNa(Ge₃Na)O₈, CoNa(Sn₃Li)O₈,CoNa(Sn₃Na)O₈, ZnLi(Ti₃Li)O₈, ZnLi(Ti₃Na)O₈, ZnLi(Mn₃Li)O₈, ZnLi(Ti₃Li)O₈, ZnLi(Ge₃Li)O₈, ZnLi(Mn₃Na)O₈, ZnLi(Ti₃Na)O₈, ZnLi(Ge₃Na)O₈, ZnLi(Sn₃Li)O₈, ZnLi(Sn₃Na)O₈, ZnNa(Ti₃Li)O₈, ZnNa(Ti₃Na)O₈, ZnNa(Mn₃Li)O₈, ZnNa(Ti₃Li)O₈, ZnNa(Ge₃Li)O₈, ZnNa(Mn₃Na)O₈, ZnNa(Ti₃Na)O₈, ZnNa(Ge₃Na)O₈, ZnNa(Sn₃Li)O₈, ZnNa(Sn₃Na)O₈, CaLi(Ti₃Li)O₈, CaLi(Ti₃Na)O₈, CaLi(Mn₃Li)O₈, CaLi(Ti₃Li)O₈, CaLi(Ge₃Li)O₈, CaLi(Mn₃Na)O₈, CaLi(Ti₃Na)O₈, CaLi(Ge₃Na)O₈, CaLi(Sn₃Li)O₈, CaLi(Sn₃Na)O₈, CaNa(Ti₃Li)O₈, CaNa(Ti₃Na)O₈, CaNa(Mn₃Li)O₈, CaNa(Ti₃Li)O₈, CaNa(Ge₃Li)O₈, CaNa(Mn₃Na)O₈, CaNa(Ti₃Na)O₈, CaNa(Ge₃Na)O₈, CaNa(Sn₃Li)O₈, CaNa(Sn₃Na)O₈, MgLi(Ti₃Li)O₈, MgLi(Ti₃Na)O₈, MgLi(Mn₃Li)O₈, MgLi(Ti₃Li)O₈, MgLi(Ge₃Li)O₈, MgLi(Mn₃Na)O₈, MgLi(Ti₃Na)O₈, MgLi(Ge₃Na)O₈, MgLi(Sn₃Li)O₈, MgLi(Sn₃Na)O₈, MgNa(Ti₃Li)O₈, MgNa(Ti₃Na)O₈, MgNa(Mn₃Li)O₈, MgNa(Ti₃Li)O₈, MgNa(Ge₃Li)O₈, MgNa(Mn₃Na)O₈, MgNa(Ti₃Na)O₈, MgNa(Ge₃Na)O₈, MgNa(Sn₃Li)O₈, MgNa(Sn₃Na)O₈, CuLi(Ti₃Li)O₈, CuLi(Ti₃Na)O₈, CuLi(Mn₃Li)O₈, CuLi(Ti₃Li)O₈, CuLi(Ge₃Li)O₈, CuLi(Mn₃Na)O₈, CuLi(Ti₃Na)O₈, CuLi(Ge₃Na)O₈, CuLi(Sn₃Li)O₈, CuLi(Sn₃Na)O₈, CuNa(Ti₃Li)O₈, CuNa(Ti₃Na)O₈, CuNa(Mn₃Li)O₈, CuNa(Ti₃Li)O₈, CuNa(Ge₃Li)O₈, CuNa(Mn₃Na)O₈, CuNa(Ti₃Na)O₈, CuNa(Ge₃Na)O₈, CuNa(Sn₃Li)O₈, CuNa(Sn₃Na)O₈ et de combinaisons de ceux-ci.

15. Pigment vert dépourvu de nickel selon la revendication 1, dans lequel le pigment comprend un premier oxyde métallique mixte sélectionné dans le groupe composé de Li₂(Cr₂Ti₂)O₈, Li₂(Cr₂Mn₂)O₈, Li₂(Cr₂Sn₂)O₈, Li₂(Cr₂Ge₂)O₈, Li₂(B₂Ti₂)O₈, Li₂(B₂Mn₂)O₈, Li₂(B₂Sn₂)O_{S}, Li₂(B₂Ge₂)O₈, Li₂(Fe₂Ti₂)O₈, Li₂(Fe₂Mn₂)O₈, Li₂(Fe₂Sn₂)O₈, Li₂(Fe₂Ge₂)O₈, Li₂(Mn₂Ti₂)O₈, Li₂(Mn₂Sn₂)O₈, Li₂(Mn₂Ge₂)O₈, Li₂(Al₂Ti₂)O₈, Li₂(Al₂Mn₂)O₈, Li₂(Al₂Sn₂)O₈, Li₂(Al₂Ge₂)O₈, Na₂(Cr₂Ti₂)O₈, Na₂(Cr₂Mn₂)O₈, Na₂(Cr₂Ge₂)O₈, Na₂(Cr₂Sn₂)O₈, Na₂(B₂Ti₂)O₈, Na₂(B₂Mn₂)O₈, Na₂(B₂Ge₂)O₈, Na₂(B₂Sn₂)O₈, Na₂(Fe₂Ti₂)O₈, Na₂(Fe₂Mn₂)O₈, Na₂(Fe₂Ge₂)O₈, Na₂(Sn₂Mn₂)O₈, Na₂(Mn₂Ti₂)O₈, Na₂(Mn₂Ge₂)O₈, Na₂(Al₂Ti₂)O₈, Na₂(Al₂Mn₂)O₈, Na₂(Al₂Sn₂)O₈, et de Na₂(Al₂Ge₂)O₈ et de combinaisons de ceux-ci. de combinaisons de ceux-ci.
